(19)

Europäisches Patentamt

European Patent Office

Office européen des brevets

(11) **EP 4 393 690 A1**

(12) **EUROPEAN PATENT APPLICATION**

(43) Date of publication:
**03.07.2024  Bulletin 2024/27**

(21) Application number: **23220792.8**

(22) Date of filing: **29.12.2023**

(51) International Patent Classification (IPC):
*B32B 1/00* (2024.01)        *B32B 27/08* (2006.01)
*B32B 27/32* (2006.01)       *B32B 27/34* (2006.01)
*B32B 27/36* (2006.01)       *H01M 50/105* (2021.01)
*H01M 50/126* (2021.01)      *H01M 50/129* (2021.01)

(52) Cooperative Patent Classification (CPC):
**B32B 1/00; B32B 27/08; B32B 27/32; B32B 27/34;
B32B 27/36; H01M 50/105; H01M 50/119;
H01M 50/121; H01M 50/124; H01M 50/126;
H01M 50/129; H01M 50/131; H01M 50/133;
H01M 50/136; B32B 2250/03;**        (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **30.12.2022  KR 20220190532**

(71) Applicant: **Youlchon Chemical Co., Ltd.
Seoul 07057 (KR)**

(72) Inventors:
• **SONG, Nok Jung
  07057 Seoul (KR)**

• **HAN, Hee Sik
  15430 Ansan-si (KR)**
• **KIM, Huihun
  15430 Ansan-si (KR)**
• **SHIN, Sung Chul
  15430 Ansan-si (KR)**
• **SONG, Moonkyu
  15430 Ansan-si (KR)**
• **LEE, Ji Min
  15430 Ansan-si (KR)**
• **PARK, Han Chul
  15430 Ansan-si (KR)**
• **KIM, Geon Ryong
  15430 Ansan-si (KR)**

(74) Representative: **V.O.
P.O. Box 87930
2508 DH Den Haag (NL)**

(54) **POUCH FILM FOR SECONDARY BATTERY HAVING HIGH POISSON'S RATIO, METHOD FOR PREPARING THE POUCH FILM, SECONDARY BATTERY USING THE SAME AND METHOD FOR MANUFACTURING THE SECONDARY BATTERY**

(57)    Provided is a secondary battery pouch film in which at least an outer layer, a barrier layer, and a sealant layer are structured in that order, wherein the outer layer includes nylon and polyethylene terephthalate films, the barrier layer is made of aluminum, and the Poisson's ratio is 0.4 to 0.5, a method for preparing the pouch film, a secondary battery using the same, and a method for manufacturing the secondary battery. The cracks at the edge that occur during deep forming of the secondary battery pouch film may be suppressed, and the edge may be formed thick, thereby providing excellent high formability. Since the secondary battery pouch film is capable of improving the energy density of secondary batteries, it is particularly useful as a medium to large-sized secondary battery pouch film for electric vehicles or energy storage devices.

EP 4 393 690 A1

(52) Cooperative Patent Classification (CPC): (Cont.)
B32B 2250/24; B32B 2255/10; B32B 2255/205;
B32B 2270/00; B32B 2307/206; B32B 2307/306;
B32B 2307/31; B32B 2307/514; B32B 2307/714;
B32B 2307/7242; B32B 2307/7244;
B32B 2307/7246; B32B 2307/7376;
B32B 2307/738; B32B 2307/752; B32B 2439/06;
B32B 2457/10

**Description**

**Technical Field**

The present invention relates to a pouch film for a secondary battery having a high Poisson's ratio, a method for preparing the pouch film, a secondary battery using the same, and a method for manufacturing the secondary battery, and more particularly, to a pouch film for a secondary battery that is particularly suitable for a medium-sized to large-sized battery as it forms a thick edge without cracks during forming of the pouch film for the secondary battery and thus has a high formability, a method for preparing the pouch film, a secondary battery using the same, and a method for manufacturing the secondary battery.

[National Research and Development Project Supporting The Present Invention]
[Assignment unique number] 1415181922
[Assignment number] 20022450
[Name of ministry] Ministry of Trade, Industry and Energy
[Name of project management organization] Korea Institute of Industrial Technology Evaluation and Planning
[Research project name] Material/Parts Package Type (Top Company)
[Research assignment name] Development of a next-generation secondary battery pouch capable of realizing more than twice the high adhesive strength at 60°C
[Contribution rate] 1/1
[Name of agency in charge of assignment] Youlchon Chemical Co., Ltd.
[Research period] 2022-09-01 ~ 2022-12-31
[Assignment unique number] 1415185612
[Assignment number] 20022450
[Name of ministry] Ministry of Trade, Industry and Energy
[Name of project management organization] Korea Institute of Industrial Technology Evaluation and Planning
[Research project name] Material/Parts Package Type (Top Company)
[Research assignment name] Development of a next-generation secondary battery pouch capable of realizing more than twice the high adhesive strength at 60°C
[Contribution rate] 1/1
[Name of agency in charge of assignment] Youlchon Chemical Co., Ltd.
[Research period] 2023-01-01 ~ 2023-12-31

**Background Art**

Lithium secondary batteries (LiB) are being applied to many applications based on various advantages such as high energy density and excellent output.
As a laminated film for encasing a secondary battery, with a multilayer structure that surrounds an electrode group and an electrolyte of the secondary battery, a secondary battery pouch film is a key component material that determines the battery's stability, lifespan characteristics, and operational sustainability and requires mechanical flexibility and strength, high oxygen/water vapor barrier properties, high thermal sealing strength, chemical resistance to electrolyte solutions, electrical insulation, and high temperature stability, etc.
Secondary battery pouch film typically consists of an outer layer, a barrier layer, and an inner sealant layer.
The outer layer or outermost layer is made of nylon, a blend of nylon and polyethylene terephthalate (PET), oriented polypropylene (OPP), polyethylene, and the like. The outer layer or outermost layer requires heat resistance, pinhole resistance, chemical resistance, formability, and insulation, etc.
The barrier layer requires formability as well as barrier properties against water vapor and other gases. In this respect, metals with formability such as aluminum (Al), iron (Fe), copper (Cu), and nickel (Ni) etc. are used in the barrier layer, and aluminum is currently used the most.
Since the sealant layer which is an inner layer is in contact with the electrolyte, it requires electrolyte resistance, and insulation resistance etc. as well as thermal adhesiveness and formability.
As the application of LiB is expanded from small-sized to medium-sized to large-sized fields such as automobiles and energy storage systems (ESS), secondary battery pouch films also need characteristics suitable for medium-sized tfo large-sized fields, such as high safety and high formability.
In this regard, the cell size of lithium secondary batteries (LiB) for automobiles and the forming depth of secondary battery pouches are factors that may greatly affect secondary battery capacity. The cell size thereof is larger than that of general small-sized secondary batteries and high formability is required. In addition, the forming depth of the secondary battery pouches determines the capacity of the cells. Thus, the deeper forming is essential to reach 700Wh/L, which is the required capacity of next-generation secondary batteries.

Disclosure of Invention

Technical Problem

In exemplary embodiments of the present invention, in one aspect, an object is to provide a pouch film for a secondary battery capable of forming a thick edge by suppressing cracks at the edge that may occur during deep forming of the pouch film for a secondary battery, a method for preparing the pouch film, a secondary battery encased with the pouch film, and a method for manufacturing the secondary battery.

In exemplary embodiments of the present invention, in another aspect, an object is to provide a pouch film for a secondary battery with excellent formability, a method for preparing the pouch film, a secondary battery encased with the pouch film, and a method for manufacturing the secondary battery.

**Solution to Problem**

Exemplary embodiments of the present invention provide a secondary battery pouch film in which at least an outer layer, a barrier layer, and a sealant layer are structured in that order, and Poisson's ratio is 0.4 to 0.5.

In an exemplary embodiment, the barrier layer is made of aluminum, and when the barrier layer has a thickness of 60 $\mu$m before forming, a remaining thickness of aluminum at the edge of the secondary battery pouch film, measured by a following method, may be 34 $\mu$m to 40 $\mu$m.

**[Measurement of remaining thickness of aluminum at edge]**

A secondary battery pouch film specimen with the size of 240 mm (MD) X 266 mm (TD) is prepared and used to form a pouch having a forming depth of 12mm using a forming machine. After forming 12 mm, an edge is cut using a cross-section cutting machine to measure a maximum thickness of the aluminum cross-section of the secondary battery pouch film specimen through SEM.

In an exemplary embodiment, a maximum forming depth of the secondary battery pouch film measured by a following method may be 16 mm to 22 mm.

**[Measurement of formability]**

A secondary battery pouch film specimens with the size of 240 mm (MD) X 266 mm (TD) are prepared, and a formability thereof is evaluated using a forming machine. The formability results are evaluated by measuring a maximum forming depth of a pouch that is formed without cracks after 10 times of measurement. That is, the formability evaluation is repeated by changing a forming depth until 10 or more specimens do not have cracks, and the forming depth is measured as the maximum forming depth when 10 or more specimens do not have cracks.

In exemplary embodiments of the present invention, a method for preparing the above-described secondary battery pouch film is provided, the method including laminating nylon and polyethylene terephthalate (PET) films, and laminating the laminated nylon and PET films with aluminum which is a barrier layer.

In exemplary embodiments of the present invention, a secondary battery encased with the above-described secondary battery pouch film is also provided.

In an exemplary embodiment, the secondary battery may be used for electric vehicles or energy storage devices.

Additionally, in exemplary embodiments of the present invention, provided is a method for manufacturing the secondary battery, the method including encasing the secondary battery with the above-described secondary battery pouch film.

**Advantageous Effects of Invention**

In exemplary embodiments of the present invention, a secondary battery pouch film has excellent high formability because cracks at the edge that may occur during deep forming of the secondary battery pouch film may be suppressed, thereby forming a thick edge. Since the secondary battery pouch film is capable of improving an energy density of secondary batteries, it is particularly useful as a medium-sized to large-sized secondary battery pouch film for electric vehicles or energy storage devices.

**Brief Description of Drawing**

The above and other aspects, features and advantages of the disclosed exemplary embodiments will be more apparent from the following detailed description taken in conjunction with the accompanying drawing in which:

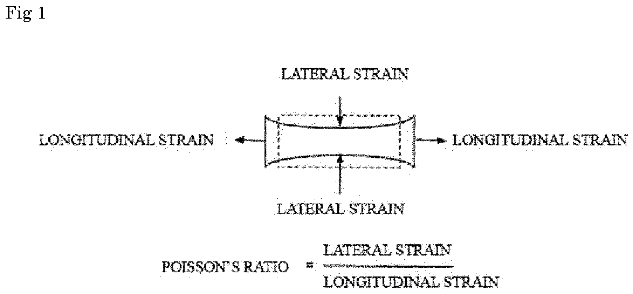

FIG. 1 is a schematic diagram explaining the concept of Poisson's ratio.

**Mode for the Invention**

Exemplary embodiments are described more fully hereinafter. The invention may, however, be embodied in many different forms and should not be construed as limited to the exemplary embodiments set forth herein. Rather, these exemplary embodiments are provided so that this disclosure will be thorough and complete, and will fully convey the scope of the invention to those skilled in the art. In the description, details of features and techniques may be omitted to more clearly disclose exemplary embodiments.

Term Definition

In this disclosure, when a secondary battery pouch film includes layer(s), the secondary battery pouch does not necessarily consist of only that layer, and additional layers may be included therein.
In this disclosure, being formed "on" a specific layer includes not only being formed directly on that layer, but also being formed after interposing another additional layer in between.
In this disclosure, edge or edge part refers to a corner of a formed pouch. For example, during forming, a pouch film is prepared in the form of a rectangular cup with the size of 185 mm (X-axis) X 85 mm (Y-axis) X 12 mm (Z-axis). The edge refers to a portion with the size of 0.5 mm X 0.5 mm X 0.5 mm from the end point of the corner of the rectangular cup.
MD is herein used as an abbreviation for machine direction.
TD is herein used as an abbreviation for transverse direction.
SEM is herein used as an abbreviation for scanning electron microscope.

Description of Exemplary Embodiments

Exemplary embodiments of the present invention are described in detail below.
It may be difficult to form a thick edge because cracks easily occur at the edge during deep forming of secondary battery pouch films. In other words, how thick the edge can be formed may be a measure of high formability. How thick the edge can be formed may be evaluated by measuring a remaining thickness (post-forming thickness) of the barrier layer of the edge after forming, as will be described later.
The present inventors found that Poisson's ratio of the secondary battery pouch film is related to a thickness of the edge during deep forming and resulting high formability, and arrived at the present invention through repeated research.
Specifically, in exemplary embodiments of the present invention, the secondary battery pouch film has a Poisson's ratio of 0.4 or more, preferably 0.41 or more, or 0.42 or more, or 0.43 or more, or 0.44 or more, or 0.45 or more, or 0.46 or more, or 0.47 or more, or 0.48 or more, and the upper limit is 0.5.
FIG. 1 is a schematic diagram explaining the concept of Poisson's ratio. As shown in FIG. 1, when the pouch film is pulled to both sides in the longitudinal direction, it increases in each longitudinal direction and decreases in the lateral direction, and then stops at a certain point. That is, as the longitudinal strain acts, a lateral strain also acts in the lateral direction. The value obtained by dividing the lateral strain by the longitudinal strain (see the formula below) when there is no further longitudinal expansion and lateral contraction is called Poisson's Ratio.

[Formula 1]

$$\text{POISSON'S RATIO} = \frac{\text{LATERAL STRAIN}}{\text{LONGITUDINAL STRAIN}}$$

The Poisson's ratio may be measured using, for example, a video extensometer. Specifically, using a universal measuring instrument (UTM), the pouch film is pulled in the longitudinal direction, for example, under environmental conditions of $23\pm2°C$ and $45\pm5\%$ RH (speed 10 mm/min). The longitudinal strain and lateral strain applied to the point where it is no longer pulled may be measured using the video extensometer.

The Poisson ratio of the secondary battery pouch film may be affected by an elongation of the outer layer (nylon and polyethylene terephthalate (PET)) as well as a bonding process and post-bonding aging process, etc., the desired Poisson's ratio of the secondary battery pouch film of exemplary embodiments of the present invention may be obtained by appropriately adjusting them.

When the Poisson's ratio of the secondary battery pouch film is less than 0.4, as can be seen in the experimental examples described later, a remaining thickness of aluminum at the edge after 12 mm forming is low, and the formability is also low.

In an exemplary embodiment, the remaining thickness of aluminum at the edge of the secondary battery pouch film (thickness of aluminum before forming is 60 pm) measured as follows may be 34 $\mu$m or more, 34.5 $\mu$m or more, 35 $\mu$m or more, 35.5 $\mu$m or more, 36 $\mu$m or more, 36.5 $\mu$m or more, 37 $\mu$m or more, 37.5 $\mu$m or more, 38 $\mu$m or more, 38.5 $\mu$m or more, 39 $\mu$m or more, 39.5 $\mu$m or more, for example, from 34$\mu$m to 40 $\mu$m.

**[Measurement of remaining thickness of aluminum at edge]**

Secondary battery pouch film specimen with the size of 240 mm (MD) x 266 mm (TD) is prepared and used to form a pouch having 12mm forming depth using a 1-cup forming machine coated with chrome (Cr). After forming 12 mm, its edge is cut with a cross-section cutting machine, and a maximum thickness of aluminum cross-section of the pouch film specimen, that is, a remaining thickness, is measured through SEM. A thickness of aluminum of the pouch film specimen before forming is 60 $\mu$m.

In an exemplary embodiment, the maximum forming depth of the secondary battery pouch film measured as follows may be 16 mm or more, 16.5 mm or more, 17 mm or more, 17.5 mm or more, 18 mm or more, 18.5 mm or more, 19 mm or more, 19.5 mm or more, 20 mm or more, 20.5 mm or more, 21 mm or more, 21.5 mm or more, or 22 mm.

**[Measurement of formability]**

Secondary battery pouch film specimens with the size of 240 mm (MD) x 266 mm (TD) are used to measure its formability using a 1-cup forming machine coated with chrome (Cr).

Formability results are evaluated by measuring a maximum forming depth of the pouch films where there are no cracks for 10 times of forming and measuring. The pressure during forming is fixed at 0.3 MPa, and the R value (radius value of edge curvature) of the forming machine is 4R (4 mm). The forming size during forming is 90 mm x 120 mm, and single forming is performed.

In an exemplary embodiment, the outer layer of the secondary battery pouch film may be made of nylon, PET, polybutylene terephthalate (PBT), and the like, and is preferably made of a mixed layer of nylon and PET (laminated film of nylon and PET).

In an exemplary embodiment, the nylon film of the outer layer preferably has a thickness of 20 $\mu$m or more, and more preferably 25 $\mu$m or more, in terms of formability. However, when the thickness of the nylon film exceeds 30 $\mu$m, the breakdown voltage may decrease. Accordingly, a preferred thickness of the nylon film may be 20 $\mu$m to 30 $\mu$m, preferably 25 $\mu$m to 30 $\mu$m. When the thickness of the nylon film is less than 20 $\mu$m, the formability may be low.

In an exemplary embodiment, the thinner thickness of the PET film and the thicker thickness of the nylon film in the outer film are more advantageous for formability. However, the thinner thickness of the PET film may be more disadvantageous in terms of breakdown voltage, so from this point of view, it is preferable that the thickness of the PET film is 7 $\mu$m to 12 $\mu$m.

In an exemplary embodiment, the PET film may have MD and TD elongations of 90% to 110%, 95% to 105%, or 100%. The nylon film may have an MD elongation of 100-200%, 110-150%, or 110-125%, and a TD elongation of 70-200%, 70-150%, or 74-138%. For example, when the MD elongation of the nylon film is about 125%, of the nylon film having the TD elongation of about 75% may be used, or when the MD elongation of the nylon film is about 110%, the nylon film having the TD elongation of about 138% may be used. However, the elongations of the PET film and the nylon film are not particularly limited as long as the desired Poisson's ratio can be obtained in exemplary embodiments of the present invention.

In an exemplary embodiment, the sealant layer may be made of a polypropylene (PP) layer, such as a cast polypropylene (CPP) film, wherein the PP layer and the barrier layer may be bonded by an extrusion coating (EC) layer of polypropylene-based resin. The PP layer may contain various additives (rubber, elastomer, slip agent, etc.) depending on the required properties.

In an exemplary embodiment, the metal layer that is the barrier layer may be made of a metal such as aluminum, SUS alloy, or copper, and preferably aluminum.

In an exemplary embodiment, the PP layer of the sealant layer may contain various additives (rubber, elastomer, slip agent, etc.) depending on the required physical properties.

In an exemplary embodiment, the total thickness of the secondary battery pouch film may be, for example, 60 μm to 185 μm. In an embodiment, the thickness of the secondary battery pouch film may be 153 μm or more or 113 μm or less.

In an exemplary embodiment, the thickness (thickness before forming) of the metal layer that is the barrier layer may be, for example, 20 μm to 80 μm, preferably 40 μm to 60 μm.

In an exemplary embodiment, the thickness of the sealant layer may be, for example, 20 μm to 80 μm.

In an exemplary embodiment, the thickness of the CPP layer, which is the sealant layer, may be, for example, 20 μm to 80 μm.

In an exemplary embodiment, the thickness of the EC layer may be, for example, 0 to 60 μm.

In exemplary embodiments of the present invention, the method for preparing the secondary pouch film includes primarily laminating the nylon and PET films, and laminating the laminated nylon and polyethylene terephthalate PET films with a metal layer, preferably aluminum, which is the barrier layer.

As described above, in the general solvent dry lamination (SDL) process, the nylon film is first laminated to the barrier layer (usually aluminum is used), and secondarily the PET film is laminated thereon. Since aluminum has a poor elongation, nylon is laminated with a maximum tension to prevent thermal shrinkage. However, this already stretched nylon film means that it has already resisted to tension during applied in a pouch film. As a result, it becomes difficult to have an excellent Poisson's ratio.

On the other hand, when the nylon film and PET film are laminated in advance and the outer layer in which the nylon film and PET film are laminated is laminated with the barrier layer (the nylon film side faces the barrier layer), less force is applied for lamination, unlike the above-described process. Accordingly, the pouch film has higher resistance to tension, which can result in a higher Poisson's ratio. In addition, since the temperature exposure time during the process of preparing the outer layer is reduced, there is a merit that lamination can be done in an environment where high elongation is maintained.

In an exemplary embodiment, the method may include, laminating a resin, e.g., PP resin film, for forming the sealant layer on the opposite side of the barrier layer when laminating the laminated nylon and PET films with the barrier layer,.

In an exemplary embodiment, the method may include double-sided coating step of surface treating both sides of the metal layer, which is a barrier layer, by applying first and second coatings thereto; a third coating step of applying adhesive to both sides of the surface-treated metal layer and drying the same; and laminating the resin film for forming the above-described sealant layer and the outer layer film (laminated nylon and PET films) on both sides of the metal layer on which the adhesive has been applied and dried.

In exemplary embodiments of the present invention, a secondary battery encased with the above-described secondary battery pouch film is provided. The secondary battery may typically be a lithium secondary battery, and in particular, may be a medium to large-sized secondary battery for such as electric vehicles (EV) or energy storage systems (ESS).

Additionally, in exemplary embodiments of the present invention, provided is a method for manufacturing the secondary battery including encasing the secondary battery with the above-described secondary battery pouch film.

Exemplary embodiments of the present invention are explained in more detail through the following examples. The examples disclosed herein are illustrated for illustrative purposes only, and the examples of the present invention may be implemented in various forms and should not be construed as limited to the examples described herein.

**[Experiment method]**

The pouch film of examples and comparative examples is a laminate of an outer layer, a barrier layer, and a sealant layer, wherein the outer layer uses a laminated film of the outermost PET film (12 μm thick) and the inner nylon (Ny) film (25 μm thick), the barrier layer uses aluminum (60 μm thick), and the sealant layer uses a PP layer (80 μm thick). The total thickness of the pouch film including the thickness of the adhesive layer is 183 μm.

Examples and comparative examples are prepared in the same manner, except that the method of adhering the outer layer to the pouch film is different as follows.

In the comparative examples, the outer layer is laminated with the metal layer using a solvent dry lamination SDL method. Specifically, nylon which is the outer layer is first laminated to the aluminum layer, which is the metal layer, and secondarily PET is laminated thereon. Afterwards, the PP layer, which is the inner layer (sealant layer), is extruded to produce a pouch film. In this process, since nylon can easily undergo heat shrinkage on aluminum, which is a hard metal, the nylon is laminated with a maximum tension to prevent heat shrinkage.

The pouch film of the examples is made by laminating the already laminated nylon and PET films to aluminum at once (laminating the nylon film to face aluminum), and then the PP layer which is the inner layer (sealant layer) is extruded and laminated on the opposite side. Accordingly, the tension and temperature exposure time during the process of preparing the outer layer are reduced, making it possible to prepare a pouch film with high resistance to tension, that is, a high Poisson's ratio.

Each pouch film is prepared in the size of 240 mm (MD) x 266 mm (TD).

In the examples and comparative examples, the Poisson's ratio, the remaining thickness of aluminum at the edge, and the maximum forming depth for formability evaluation are evaluated as follows.

**<Measurement of Poisson's ratio>**

Using a UTM, the pouch film is pulled in the longitudinal direction under environmental conditions of 23±2°C and 45±5% RH (speed 10 mm/min). The longitudinal strain and lateral strain applied to the point where it is no longer pulled is measured using the video extensometer.

**<Measurement of formability and remaining thickness of aluminum at edge after forming>**

A secondary battery pouch film in the size of 240 mm (MD) x 266 mm (TD) is evaluated for the formability and the remaining thickness of aluminum at the edge through a 1-cup forming machine coated with chrome (Cr).

The formability results are obtained by evaluating the maximum forming depth of the pouch film that is formed without cracks for all 10 times of forming. The pressure during forming is fixed at 0.3 MPa, and the R value (radius value of edge curvature) of the forming machine is 4R (4 mm). The forming size during forming is 90 mm x 120 mm, and single forming is performed.

The remaining thickness of aluminum at edge after forming is evaluated by forming 12 mm, cutting the edge using a cross-section cutting machine to evaluate the aluminum cross-section of the pouch film through SEM, and measuring the thickness of aluminum (maximum thickness and remaining thickness after forming). As such, the reason of measuring the remaining thickness of aluminum (thickness after forming) at the edge of the pouch film is because the remaining thickness of the barrier layer after forming has affect mostly on formability.

The evaluation results of the Poisson's ratio, the remaining thickness of aluminum at the edge (unit: $\mu$m), and the formability (unit: mm) of the pouch film of examples and comparative examples are shown in the following Table 1 to Table 3.

[Table 1]

| Item | Example 1 | Example 2 | Example 3 | Example 4 | Example 5 | Example 6 | Example 7 | Example 8 | Comparative Example 1 | Comparative Example 2 |
|---|---|---|---|---|---|---|---|---|---|---|
| Poisson's Ratio | 0.44 | 0.43 | 0.48 | 0.42 | 0.42 | 0.43 | 0.44 | 0.43 | 0.38 | 0.37 |

[Table 2]

| Item | Example 1 | Example 2 | Example 3 | Example 4 | Example 5 | Example 6 | Example 7 | Example 8 | Comparative Example 1 | Comparative Example 2 |
|---|---|---|---|---|---|---|---|---|---|---|
| Maximum Thickness | 37.5 | 35.8 | 37.2 | 36.5 | 35.2 | 34.6 | 37.1 | 35.5 | 33.1 | 33.7 |

[Table 3]

| Item | Example 1 | Example 2 | Example 3 | Example 4 | Example 5 | Example 6 | Example 7 | Example 8 | Comparative Example 1 | Comparative Example 2 |
|---|---|---|---|---|---|---|---|---|---|---|
| Formability | 18.5 | 17.0 | 18.0 | 17.0 | 17.5 | 17.0 | 17.5 | 17.0 | 13.5 | 14.0 |

As seen above, in the examples where the Poisson's ratio is 0.4 or more, the remaining thickness of aluminum at the edge after forming is high and the formability is excellent compared to the comparative examples where the Poisson's ratio is less than 0.4.

Although non-limiting and exemplary embodiments of the present invention have been described above, the technical idea of the present invention is not limited to the accompanying drawings or the above description. It is obvious to those skilled in the art that various forms of modification are possible without departing from the technical spirit of the present invention, and such types of modifications will fall within the scope of claims of the present invention.

**Claims**

1.  A secondary battery pouch film, comprising

    at least an outer layer, a barrier layer, and a sealant layer which are structured in that order,
    wherein the outer layer comprises nylon and polyethylene terephthalate films,
    the barrier layer is made of aluminum, and
    the Poisson's ratio is 0.4 to 0.5.

2.  The secondary battery pouch film of claim 1,

    wherein, when the thickness of aluminum before forming is 60 $\mu$m,
    the remaining thickness of aluminum at the edge of the secondary battery pouch film is 34 $\mu$m to 40 $\mu$m, as measured by a measurement of remaining thickness of aluminum at edge, wherein in said measurement of remaining thickens of aluminum at edge:

        a secondary battery pouch film specimen with the size of 240 mm (MD) X 266 mm (TD) is prepared and used to form a pouch having a forming depth of 12mm using a forming machine;
        after forming 12 mm, an edge is cut using a cross-section cutting machine to measure a maximum thickness of the aluminum cross-section of the secondary battery pouch film specimen through SEM.

3.  The secondary battery pouch film of any one of claims 1 to 2,
    wherein a maximum forming depth of the secondary battery pouch film is 16 mm to 22 mm, as measured by a measurement of formability, wherein in said measurement of formability:

        secondary battery pouch film specimens with the size of 240 mm (MD) X 266 mm (TD) are prepared, and a formability thereof is evaluated using a forming machine;
        the formability results are evaluated by measuring a maximum forming depth of a pouch that is formed without cracks for 10 times of forming.

4.  A method for preparing the secondary battery pouch film of any one of claims 1 to 3, the method comprising:

        laminating nylon and polyethylene terephthalate (PET) films; and
        laminating the laminated nylon and PET films with the barrier layer.

5.  A secondary battery encased with the secondary battery pouch film of any one of claims 1 to 3.

6.  The secondary battery of claim 5,
    wherein the secondary battery is for electric vehicles or energy storage devices.

7.  A method for manufacturing a secondary battery, the method comprising
    encasing the secondary battery with the secondary battery pouch film of any one of claims 1 to 3.

Fig 1

LATERAL STRAIN

LONGITUDINAL STRAIN

LONGITUDINAL STRAIN

LATERAL STRAIN

$$\text{POISSON'S RATIO} = \frac{\text{LATERAL STRAIN}}{\text{LONGITUDINAL STRAIN}}$$

Europäisches
Patentamt

European
Patent Office

Office européen
des brevets

# EUROPEAN SEARCH REPORT

**Application Number**

EP 23 22 0792

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/320635 A1 (OH SE YOUNG [KR] ET AL) 6 October 2022 (2022-10-06) | 1-7 | INV. B32B1/00 |
| Y | * abstract; claims 1-20 * <br> * paragraphs [0090], [0091] * <br> * paragraphs [0104] - [0106] * <br> * paragraphs [0113] - [0115] * <br> * paragraphs [0109] - [0111], [0190] * <br> * paragraphs [0125] - [0128] * | 1-7 | B32B27/08 <br> B32B27/32 <br> B32B27/34 <br> B32B27/36 <br> H01M50/105 <br> H01M50/126 <br> H01M50/129 |
| X | WO 2021/251736 A1 (LG ENERGY SOLUTION LTD [KR]) 16 December 2021 (2021-12-16) <br> * abstract; claims 1-19 * | 1-7 | |
| X | US 2015/232611 A1 (MANABE ISAO [JP] ET AL) 20 August 2015 (2015-08-20) | 1,4 | |
| Y | * abstract; claims 12-22 * <br> * paragraphs [0002], [0031], [0044], [0048] * | 1-7 | |
| A | KR 2022 0025974 A (HYOSUNG CHEMICAL CORP [KR]) 4 March 2022 (2022-03-04) <br> * the whole document * | 1-7 | TECHNICAL FIELDS SEARCHED (IPC) |
| A | YU MIN SOOK ET AL: "Effect of film properties on formability of aluminum pouch for secondary battery", JOURNAL OF MECHANICAL SCIENCE AND TECHNOLOGY, SPRINGER, DE, vol. 31, no. 6, 25 June 2017 (2017-06-25), pages 2759-2763, XP036265333, ISSN: 1738-494X, DOI: 10.1007/S12206-017-0519-0 [retrieved on 2017-06-25] * the whole document * | 1-7 | B32B <br> H01M |

The present search report has been drawn up for all claims

| Place of search | Date of completion of the search | Examiner |
|---|---|---|
| The Hague | 23 April 2024 | Bergmans, Koen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 22 0792

This annex lists the patent family members relating to the patent documents cited in the above-mentioned European search report.
The members are as contained in the European Patent Office EDP file on
The European Patent Office is in no way liable for these particulars which are merely given for the purpose of information.

23-04-2024

| Patent document cited in search report | Publication date | Patent family member(s) | Publication date |
|---|---|---|---|
| US 2022320635 A1 | 06-10-2022 | CN 115149161 A | 04-10-2022 |
| | | EP 4068445 A2 | 05-10-2022 |
| | | JP 2022155574 A | 13-10-2022 |
| | | JP 2024024051 A | 21-02-2024 |
| | | KR 20220135569 A | 07-10-2022 |
| | | US 2022320635 A1 | 06-10-2022 |
| WO 2021251736 A1 | 16-12-2021 | CN 113782878 A | 10-12-2021 |
| | | CN 215955369 U | 04-03-2022 |
| | | EP 4135105 A1 | 15-02-2023 |
| | | JP 7416979 B2 | 17-01-2024 |
| | | JP 2023526609 A | 22-06-2023 |
| | | JP 2024026624 A | 28-02-2024 |
| | | KR 20210152969 A | 16-12-2021 |
| | | KR 20230145964 A | 18-10-2023 |
| | | US 2023207931 A1 | 29-06-2023 |
| | | WO 2021251736 A1 | 16-12-2021 |
| US 2015232611 A1 | 20-08-2015 | CN 104718243 A | 17-06-2015 |
| | | JP 6481367 B2 | 13-03-2019 |
| | | JP WO2014069236 A1 | 08-09-2016 |
| | | KR 20150081245 A | 13-07-2015 |
| | | TW 201431681 A | 16-08-2014 |
| | | US 2015232611 A1 | 20-08-2015 |
| | | WO 2014069236 A1 | 08-05-2014 |
| KR 20220025974 A | 04-03-2022 | NONE | |

EPO FORM P0459

For more details about this annex : see Official Journal of the European Patent Office, No. 12/82